Europäisches Patentamt

(19) European Patent Office

Office européen des brevets

(11) **EP 1 286 879 B1**

(12) **EUROPEAN PATENT SPECIFICATION**

(45) Date of publication and mention
of the grant of the patent:
**21.07.2004 Bulletin 2004/30**

(51) Int Cl.⁷: **B62D 25/20**

(86) International application number:
**PCT/SE2001/001091**

(21) Application number: **01934747.5**

(22) Date of filing: **17.05.2001**

(87) International publication number:
**WO 2001/087690 (22.11.2001 Gazette 2001/47)**

(54) **FLOOR ARRANGEMENT FOR A VEHICLE**

FAHRZEUGBODENVORRICHTUNG

DISPOSITIF DE PLANCHER POUR VEHICULE

(84) Designated Contracting States:
**DE**

(30) Priority: **18.05.2000 SE 0001818**

(43) Date of publication of application:
**05.03.2003 Bulletin 2003/10**

(73) Proprietor: **Scania CV AB (publ)
151 87 Södertälje (SE)**

(72) Inventor: **JÖNSSON, Ola
S-141 44 Huddinge (SE)**

(56) References cited:
**DE-A1- 4 412 427          DE-A1- 19 619 984
US-A- 3 416 465          US-A- 4 965 138**

## Description

BACKGROUND TO THE INVENTION, AND STATE OF THE ART

The present invention relates to a floor arrangement for a space in a vehicle according to the preamble to patent claim 1.

A truck incorporates an elongate chassis element which, inter alia, supports the driver's cab and the engine. The cab is defined inter alia by a frame which may be made of sheetmetal and which incorporates a surface which defines the cab floor. The engine is usually situated under the cab and hence under said surface of the frame, which means that noise from the engine propagates to the cab substantially in the form of bending waves due to frame deformation. For the sake of truck driver comfort, the cab should incorporate an internal lining with sound damping capacity.

The cab floor is usually provided with some kind of rubber mat. Such a rubber mat often incorporates a layer of rubber about 5 mm thick and a layer of cellular plastic about 25 mm thick with closed pores. So-called soft cellular plastic is often used because it provides better sound damping than rigid foam plastic. The weight of such a rubber mat may be regarded as high, particularly in relation to endeavouring to lighten component parts used in truck construction. The rubber mat rests by gravity on the frame, which may be made of sheetmetal, and one square metre of the frame, i.e. the portion of the frame which incorporates the surface which defines the cab floor, supports about 8 kg which may be accounted for by the rubber mat. The foam rubber layer acts as a spring intended to alleviate, and insulate the rubber layer from, vibration of the sheetmetal frame.

A truck driver often spends a great deal of time in the cab. It also happens that he/she may sleep in the cab, to which end many cabs are provided with bedlike arrangements. It follows that the driver sometimes stands up and walks about in the cab. The cab floor therefore has to be comfortable to stand and walk on.

The driver of a truck in which the cab is provided with a rubber mat of the type mentioned above may find that the rubber mat is spongy and too soft to be comfortable to walk. With a view to providing a mat which is comfortable to walk on, rigid cellular plastic with closed pores has been tried instead of soft cellular plastic with closed pores, but replacing soft cellular plastic with rigid cellular plastic does not provide sufficient sound damping.

The cab frame on which the rubber mat is arranged is often treated in such a way as to create a rigid structure. The frame may for example be corrugated to create a rigid structure or be provided with stiffening ribs or the like. Thus the rubber mat rests not on a planar surface but on an uneven surface. The driver will therefore perceive this unevenness when he/she stands or walks on the floor if it incorporates a rubber mat of the aforesaid kind.

A floor arrangement according the preamble of claim 1 is known from the document DE-A-4 412 427.

SUMMARY OF THE INVENTION

The object of the present invention is to eliminate the problem described above. What is particularly aimed at is a floor arrangement which is light, has good sound damping characteristics and is comfortable to walk on.

This object is achieved with the floor arrangement indicated in the introduction which has the features defined in the characterising part of patent claim 1.

The space in which the floor arrangement is applied may be a driver's cab for a truck. The space is defined inter alia by a frame which incorporates a surface which faces said space. The frame may be made of sheetmetal and may also be provided with stiffening ribs or the like to stiffen the structure. The surface of the sheetmetal frame on which the floor arrangement is intended to be applied may be uneven. For the floor arrangement to be comfortable to walk on and any unevenness of the frame to be evened out, the floor arrangement incorporates a plate arranged at a distance from said frame in such a way that a void is formed between said frame surface and the plate. The cab floor may thus be likened to a double floor whereby noise radiating from the frame is transmitted to said void which contains air between the frame and the plate. The plate is preferably rigid and intended to even out the unevenness which may be present in the frame.

According to one embodiment of the invention, spacing devices are arranged to extend between said frame surface and said plate and to create said distance between said frame surface and said plate. The spacing devices may for example incorporate elongate bars which may for example be arranged parallel to one another or cross in such a way to form a grid as viewed in a plane which extends through said bars. Alternatively the spacing devices may incorporate a multiplicity of spacing elements evenly distributed relative to the surface of the plate. It should be noted that the spacing devices have to be arranged in way of node points of the frame. This positioning minimises the risk of vibration being transmitted from the frame to the plate via the spacing devices.

The spacing devices are designed in such a way that they support the plate relative to the frame of the vehicle space so that the plate will be self-supporting. It should be noted that the contact surface between the spacing devices and the frame should be as small as possible with a view to minimising vibration transmission from the frame to the plate via the spacing devices. The plate is preferably made of some kind of plastic, e. g. polypropylene or polyethylene, produced in such a way to be more rigid and tougher and have a harder surface and better heat resistance than ordinary polyethylene. The plate together with spacing devices may be injection-moulded to minimise the manufacturing costs. It should be noted also that the spacing devices may be separate or connected to the vehicle space frame. It should be noted that the contact surface between the spacing devices and the plate should be as small as possible with a view to minimising vibration transmission from the frame to the plate via the spacing devices. A suitable material if the spacing devices are separate is aluminium in relation to endeavouring to keep parts as light as possible.

To increase the damping and reduce the risk of standing waves between the frame and the plate, an absorbent may be arranged between said frame and said plate. The absorbent may incorporate cellular plastic with open pores, e.g. polyurethane foam. It should be noted that the absorbent may also incorporate other materials, e.g. rags, but cellular plastic with open pores is preferable in being of lower density than rags and in relation to endeavouring to lighten vehicle components. The absorbent damps noise by converting part of the acoustic energy to heat.

According to a further embodiment of the invention, the thickness of the absorbent substantially corresponds to the distance between the frame surface and the plate, but there is between the frame and the absorbent an air gap whose function will be described later on in the description.

According to a further embodiment of the invention, the thickness of the absorbent is smaller than the distance between the frame surface and the plate. It is possible for the vertical extent of the absorbent to be about half the distance between the frame and the plate.

According to a further embodiment of the invention, the absorbent substantially fills said void. It is possible for cables and the like to extend in the space between the frame and the plate, in which case absorbent material may be omitted to provide space for, for example, cables.

In all the embodiments mentioned above there is an air gap between the vehicle frame and said absorbent. The presence of said air gap means that the absorbent will not act as a spring as the foam rubber layer of the rubber mat in the introductory description does. In the present invention, it is the air in said gap that will act as a spring. To provide said air gap, it is important that the thickness of the absorbent be smaller than the distance between the frame and the plate so that the absorbent is not compressed between the frame and the plate. If the absorbent is compressed between the frame and the plate, it will not perform the same function as the foam rubber layer in the rubber mat referred to in the introductory description.

According to a further embodiment of the invention, the absorption factor of the absorbent is between 0.3 and 1.0.

The absorbent's absorption factor, $\alpha$, may be calculated on the basis of the measured impedance of the absorbent, $Z_2$, and the impedance of the air. It should be noted that impedance here means the acoustic impedance.

$$\alpha = 2 - [R]^2$$

$$R = (Z_2 - Z_1)/(Z_2 + Z_1)$$

$$Z_1 = \rho_0 . C_0$$

$$Z = p/v$$

$R$ = reflection coefficient
$Z_2$ = measured impedance of the absorbent. The impedance may be measured in an impedance tube.
po = density of air
$c_0$ = velocity of sound in air
$Z$ is the ratio between the pressure in a seismic wave in a medium and the velocity which it imparts to the medium's particles.

As mentioned above, the absorbent damps noise by converting part of the acoustic energy to heat. For this conversion to be as efficient as possible, the impedance of the absorbent has to substantially correspond to the impedance of the air. The impedance of the air is arrived at by multiplying the air density po by the wave propagation velocity, i.e. the velocity of sound in air, $c_0$. If the difference between the respective impedances of the media is very great, this reduces the possibility of waves passing from one medium to the other without being reflected at the boundary surface between the media. A good absorbent has an impedance which substantially corresponds to the impedance of the air. Another way of expressing this is that the absorption factor has to be as close to unity as possible, and $R$ as close to nil as possible. This means that the impedance of the absorbent should correspond substantially to the impedance of the air.

According to a further embodiment of the invention, the distance between the frame surface and the plate is about 15-25 mm, preferably 20 mm.

The dimensions of the floor arrangement according to the invention may vary but it is conceivable for the thickness of the plate to be about 4 mm and the distance between the frame surface and the plate to be 20 mm. If an absorbent incorporating polyurethane foam with open pores substantially fills the void between the frame surface and the plate and the plate is made of polypropylene, one square metre of the frame supports about 4.5 kg which may be accounted for by the floor arrangement according to the invention, comprising about 4 kg from the plate and about 0.5 kg from the absorbent. The floor arrangement according to the invention is thus significantly lighter than the rubber mat described in the introductory description.

BRIEF DESCRIPTION OF THE DRAWINGS

The present invention will now be explained by describing various embodiments with reference to the attached drawings.

Fig. 1 depicts schematically a side view of a vehicle,
Fig. 2 depicts schematically a section of a floor arrangement according to the invention, arranged on a surface of a frame,
Fig. 3 is an exploded depiction of a floor arrangement according to a first embodiment of the invention, and
Fig. 4 is an exploded depiction of a floor arrangement according to a second embodiment of the invention.

DETAILED DESCRIPTION OF AN EMBODIMENT OF THE INVENTION

The present invention relates to a floor arrangement (floor lining) for a space in a vehicle such as a truck. It should be noted that the floor arrangement according to the invention is also applicable to other types of vehicles, e.g. other types of freight vehicles, buses or similar utility vehicles, and all types of vehicles where similar problems and requirements occur.

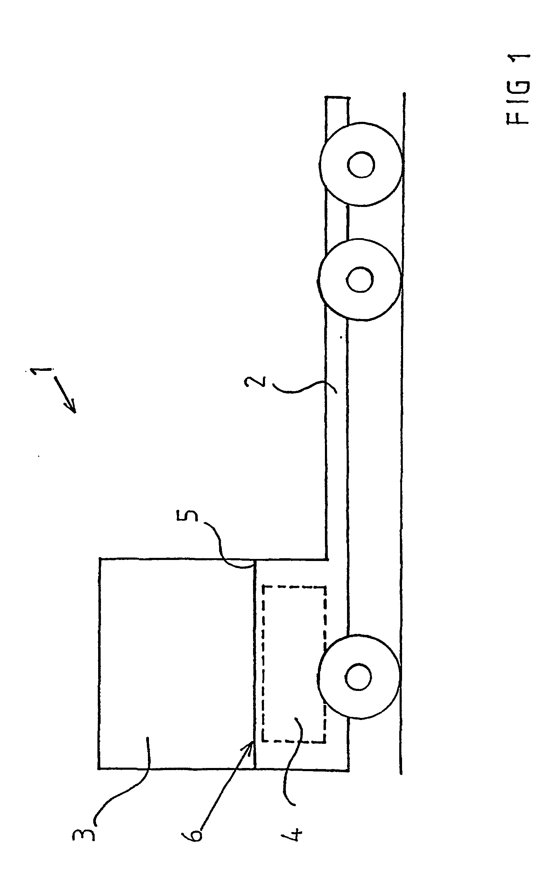

Fig. 1 depicts a truck 1 incorporating an elongate chassis element 2 which, inter alia, supports the driver's cab 3 and the engine 4. The cab 3 is defined inter alia by a frame 5 which incorporates a surface 6 facing the cab 3, i.e. the space which constitutes the cab 3, and this part of the frame 5 constitutes the floor frame of the cab 3. The frame 5 may be corrugated to stiffen the structure. The engine 4 is usually situated under the cab 3 and hence under the portion of the frame 5 which constitutes the floor frame of the cab 3. Accordingly, the cab 3 should have an internal lining which inter alia is capable of damping noise from outside the cab, e.g. noise from the engine 4.

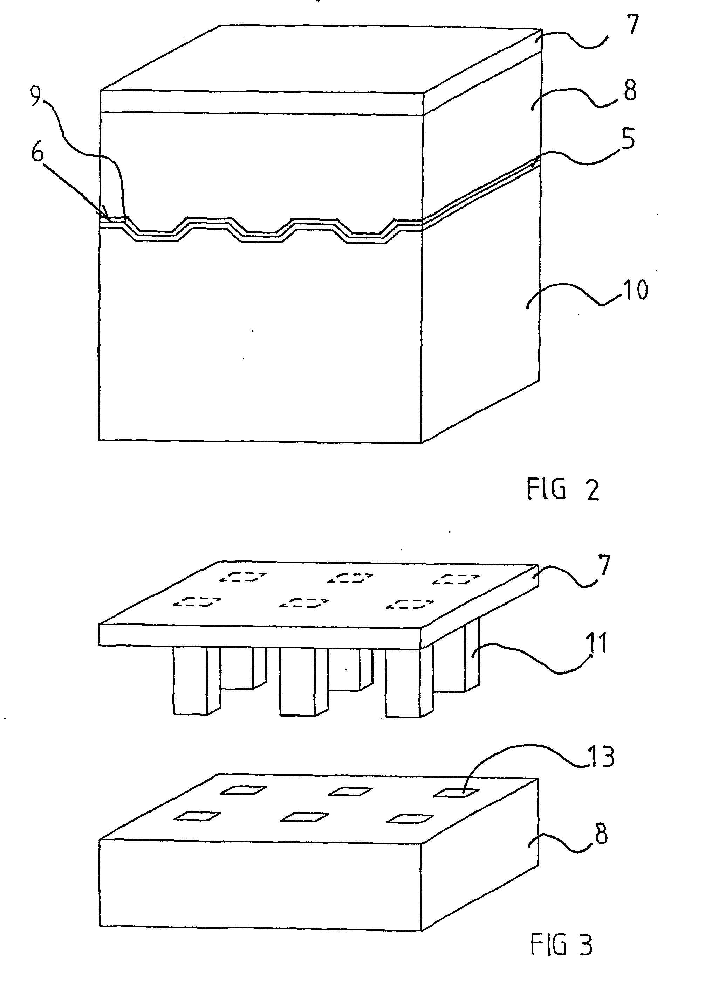

Fig. 2 depicts a section of a floor arrangement applied to the surface 6 of the frame 5 which defines the cab 3 of the truck 1 in Fig. 1. The frame 5 in Fig. 2 is corrugated to create a rigid structure. Thus the surface 6 of the frame 5 is not planar but uneven. The surface 6 extends in a substantially horizontal plane. The floor arrangement incorporates a plate 7 arranged at a distance from the surface 6 of the frame 5 and arranged substantially parallel with the surface 6 in such a way as to form a void between the surface 6 of the frame 5 and the plate 7. The plate 7 is rigid and preferably made of plastic. An absorbent 8 is arranged between the frame 5 and the plate 7. According to the embodiment depicted in Fig. 2, substantially the whole void between the surface 6 and the plate 7 is filled with absorbent material 8, but there is an air gap 9 between the surface 6 and the absorbent material 8. This means that the absorbent 8 will not be compressed between the frame 5 and the plate 7 and that there will therefore be no risk of the absorbent 8 acting like a spring as the foam rubber layer in the rubber mat referred to in the introductory description does.

An absorbent 10 is usually arranged under the frame 5 to help to damp the noise from, for example, the engine 4.

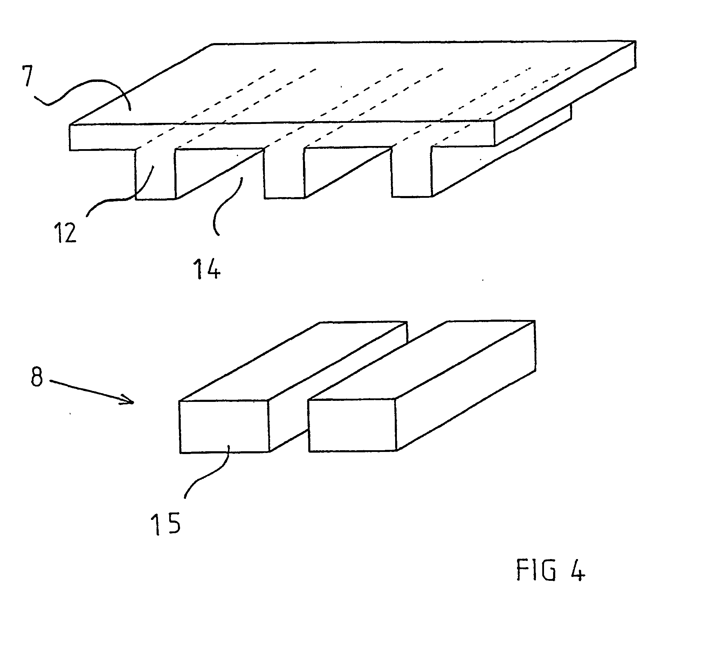

As indicated by Fig. 3 and Fig. 4, the plate 7 incorporates a multiplicity of spacing devices 11, 12 which support the plate 7 relative to the frame 5. The distance between the frame 5 and the plate 7 corresponds to the height (i.e. the vertical extent) of the spacing devices 11, 12. To prevent the absorbent 8 being compressed between the frame 5 and the plate 7, the thickness (i.e. the vertical extent) of the absorbent 8 is smaller than the height of the spacing devices 11, 12. The thickness of the absorbent 8 being smaller than the height of the spacing devices creates the possibility of the air gap 9. In Fig. 3, said spacing devices incorporate spacing elements 11 in the form of homogeneous columns of square cross-section. It should be noted that other cross-sections are also conceivable. The spacing elements 11 might also incorporate tubes of, for example, circular cross-section. It is also possible to provide spacing elements 11 in the form of cones or pyramids. In Fig. 4 the plate 7 incorporates spacing devices in the form of elongate bars 12 arranged parallel to one another. In Fig. 3 the bars 12 are of rectangular cross-section but other cross-sections are also conceivable. The fact that the spacing devices 11, 12 in Fig. 3 and Fig. 4 are integrated with the plate 7 means that the latter is self-supporting relative to the frame 5. It should be noted that the contact surface between the spacing devices 11, 12 and the frame 5 should be as small as possible with a view to minimising the propagation of vibration from the frame 5 to the plate 7 via the spacing devices 11, 12. In this respect, spacing elements 11 in the form of cones or pyramids may be preferable. If the spacing devices are integrated with the plate 7, the bases of the cones or pyramids concerned should be arranged in way of the plate 7. The tip of each cone or pyramid concerned should also be arranged in way of a node point of the frame 5.

As indicated by Fig. 3, the absorbent material 8 incorporates holes designed to accommodate the spacing devices 11 when the plate 7 and the absorbent material 8 are assembled. The plate 7 and the absorbent material 8 may be detachably assembled to one another or be firmly connected to one another. The holes 13 preferably have such dimensions relative to the spacing elements 11 that the absorbent material 8 is connected to the plate 7 by friction.

An intermediate space 14 is formed between two adjacent bars 12 in Fig. 4. The absorbent 8 also incorporates a multiplicity of slabs 15 which are intended, when assembling the floor arrangement according to the invention, to be placed in said intermediate spaces 14. The slabs 15 may be connected to the plate 7 in the same way as the absorbent 8 is connected to the plate 7 in Fig. 3.

With the floor arrangement depicted in Fig. 2, noise from sources (e.g. the engine 4) outside the cab 3 will first be damped by the absorbent 10 converting part of the sound energy to heat. The majority of the sound waves passing through the absorbent 10 will be reflected by the frame 5. The majority of the sound which passes through the frame 5 will be reflected by the plate 7. To increase the damping and reduce the risk of standing waves between the frame 5 and the plate 7, the absorbent 8 is arranged between the frame 5 and the plate 7. To prevent the absorbent 8 acting as a spring as the foam rubber layer in the rubber mat referred to in the introductory description does, an air gap 9 is arranged between the frame 5 and the absorbent 8. With the floor arrangement according to Fig. 2, the air in the gap 9 will act as a spring.

The invention is not limited to the embodiments depicted but may be varied and modified within the scopes of the ensuing patent claims.

**Claims**

1.  Floor arrangement for a space (3) in a vehicle (1) whereby the space (3) is, inter alia, defined by a frame (5) which incorporates a surface (6) extending in a substantially horizontal plane and facing said space (3), which floor arrangement incorporates a plate (7) arranged at a distance from said surface (6) of the frame (5) and arranged substantially parallel with said surface (6) in such a way that a void is formed between said surface (6) of the frame (5) and said plate (7) whereby spacing devices (11, 12) are arranged to extend between said surface (6) of the frame (5) and said plate (7) and are intended to create said distance between said surface (6) of the frame (5) and said plate (7), **characterised in that** said spacing devices (11,12) are integrated with said plate (7).

2.  Floor arrangement according to claim 1, **characterised in that** said plate (7) is rigid.

3.  Floor arrangement according to claim 1, **characterised in that** said spacing devices incorporate elongate bars (12).

4.  Floor arrangement according to claim 1, **characterised in that** said spacing devices incorporate a multiplicity of spacing elements (11).

5.  Floor arrangement according to any one of claims 1, 3 or 4, **characterised in that** said spacing devices (11, 12) are made of aluminium.

6.  Floor arrangement according to any one of claims 1, 3 or 4, **characterised in that** said spacing devices (11, 12) are made of plastic.

7.  Floor arrangement according to any one of the foregoing claims, **characterised in that** an absorbent (8) is arranged between said frame (5) and said plate (7).

8.  Floor arrangement according to claim 7, **characterised in that** the absorbent (8) has a thickness which substantially corresponds to the distance between said surface (6) of the frame (5) and said plate (7).

9.  Floor arrangement according to claim 7, **characterised in that** the absorbent (8) has a thickness which is smaller than the distance between said surface (6) of the frame (5) and said plate (7).

10. Floor arrangement according to claim 7, **characterised in that** the absorbent (8) substantially fills said void.

11. Floor arrangement according to either of claims 7 and 10, **characterised in that** an air gap is arranged between the frame (5) and the absorbent (8).

12. Floor arrangement according to claim 7, **characterised in that** the absorbent (8) has an absorption factor of between 0.3 and 1.0.

13. Floor arrangement according to claim 12, **characterised in that** the absorption factor is calculated on the basis of the impedance of the air and the impedance of the absorbent.

14. Floor arrangement according to any one of the foregoing claims, **characterised in that** said plate (7) is made of either of polypropylene and polyethylene.

15. Floor arrangement according to any one of the foregoing claims, **characterised in that** said plate (7) has a thickness of about 2-6 mm.

16. Floor arrangement according to any one of the foregoing claims, **characterised in that** the distance between the surface (6) of the frame (5) and the plate (7) is about 15-25 mm

**Patentansprüche**

1.  Bodenanordnung für einen Raum (3) in einem Fahrzeug (1), wobei der Raum (3) unter anderem durch einen Rahmen (5) begrenzt ist, der eine Oberfläche (6) aufweist, die sich in einer im Wesentlichen horizontalen Ebene erstreckt und dem Raum (3) zugewandt ist, wobei die Bodenanordnung eine Platte (7) aufweist, die in einem Abstand von der Oberfläche (6) des Rahmens (5) angeordnet ist und im Wesentlichen parallel zu der Oberfläche (6) derart angeordnet ist, dass ein Hohlraum zwischen der Oberfläche (6) des Rahmens (5) und der Platte (7) ausgebildet ist, wobei Abstandsvorrichtungen (11, 12) derart angeordnet sind, dass sie sich zwischen der Oberfläche (6) des Rahmens (5) und der Platte (7) erstrecken, und dazu ausgelegt sind, den Abstand zwischen der Oberfläche (6) des Rahmens (5) und der Platte (7) zu erzeugen, **dadurch gekennzeichnet, dass** die Abstandsvorrichtungen (11, 12) integral mit der Platte (7) ausgebildet sind.

2.  Bodenanordnung nach Anspruch 1, **dadurch gekennzeichnet, dass** die Platte (7) steif ausgebildet ist.

3.  Bodenanordnung nach Anspruch 1, **dadurch gekennzeichnet, dass** die Abstandsvorrichtungen längliche Glieder (12) ausbilden.

4.  Bodenanordnung nach Anspruch 1, **dadurch gekennzeichnet, dass** die Abstandsvorrichtungen eine Mehrzahl von Abstandselementen (11) umfassen.

5.  Bodenanordnung nach einem der Ansprüche 1, 3 oder 4, **dadurch gekennzeichnet, dass** die Abstandsvorrichtungen (11, 12) aus Aluminium hergestellt sind.

6.  Bodenanordnung nach einem der Ansprüche 1, 3 oder 4, **dadurch gekennzeichnet, dass** die Abstandsvorrichtungen (11, 12) aus Kunststoff hergestellt sind.

7.  Bodenanordnung nach einem der vorangehenden Ansprüche, **dadurch gekennzeichnet, dass** ein Absorbens (8) zwischen dem Rahmen (5) und der Platte (7) angeordnet ist.

8.  Bodenanordnung nach Anspruch 7, **dadurch gekennzeichnet, dass** das Absorbens (8) eine Dicke aufweist, die im Wesentlichen dem Abstand zwischen der Oberfläche (6) des Rahmens (5) und der Platte (7) entspricht.

9.  Bodenanordnung nach Anspruch 7, **dadurch gekennzeichnet, dass** das Absorbens (8) eine Dicke aufweist, die kleiner als der Abstand zwischen der Oberfläche (6) des Rahmens (5) und der Platte (7) ist.

10. Bodenanordnung nach Anspruch 7, **dadurch gekennzeichnet, dass** das Absorbens (8) im Wesentlichen den Hohlraum ausfüllt.

11. Bodenanordnung nach einem der Ansprüche 7 und 10, **dadurch gekennzeichnet, dass** ein Luftraum zwischen dem Rahmen (5) und dem Absorens (8) vorgesehen ist.

12. Bodenanordnung nach Anspruch 7, **dadurch gekennzeichnet, dass** das Absorbens (8) einen Absorptionsfaktor von zwischen 0,3 und 1,0 aufweist.

13. Bodenanordnung nach Anspruch 12, **dadurch gekennzeichnet, dass** der Absorptionsfaktor auf Grundlage der Impedanz von Luft und der Impedanz des Absorbens berechnet wird.

14. Bodenanordnung nach einem der vorangehenden Ansprüche, **dadurch gekennzeichnet, dass** die Platte (7) entweder aus Polypropylen oder Polyethylen hergestellt ist.

15. Bodenanordnung nach einem der vorangehenden Ansprüche, **dadurch gekennzeichnet, dass** die Platte (7) eine Dicke von etwa 2-6 mm aufweist.

16. Bodenanordnung nach einem der vorangehenden Ansprüche, **dadurch gekennzeichnet, dass** der Abstand zwischen der Oberfläche (6) des Rahmens (5) und der Platte (7) etwa 15-25 mm beträgt.

**Revendications**

1.  Agencement de plancher pour un espace (3) dans un véhicule (1) de sorte que l'espace (3) est, entre autres, défini par un châssis (5) qui incorpore une surface (6) s'étendant dans un plan sensiblement horizontal et dirigé vers ledit espace (3), lequel agencement de plancher incorpore une plaque (7) agencée à une distance de ladite surface (6) du châssis (5) et agencée sensiblement parallèle à ladite surface (6) de telle sorte qu'un vide est formé entre ladite surface (6) du châssis (5) et ladite plaque (7) de sorte que des dispositifs d'espacement (11, 12) sont agencés pour s'étendre entre ladite surface (6) du châssis (5) et ladite plaque (7) et sont prévus pour créer ladite distance entre ladite surface (6) du châssis (5) et ladite plaque (7), **caractérisé en ce que** lesdits dispositifs d'espacement (11, 12) sont intégrés à ladite plaque (7).

2.  Agencement de plancher selon la revendication 1, **caractérisé en ce que** ladite plaque (7) est rigide.

**3.** Agencement de plancher selon la revendication 1, **caractérisé en ce que** lesdits dispositifs d'espacement incorporent des barres allongées (12).

**4.** Agencement de plancher selon la revendication 1, **caractérisé en ce que** lesdits dispositifs d'espacement incorporent une multiplicité d'éléments d'espacement (11).

**5.** Agencement de plancher selon l'une quelconque des revendications 1, 3 ou 4, **caractérisé en ce que** lesdits éléments d'espacement (11, 12) sont constitués d'aluminium.

**6.** Agencement de plancher selon l'une quelconque des revendications 1, 3 ou 4, **caractérisé en ce que** lesdits éléments d'espacement (11, 12) sont constitués de matière plastique.

**7.** Agencement de plancher selon l'une quelconque des revendications précédentes, **caractérisé en ce qu'**un absorbant (8) est agencé entre ledit châssis (5) et ladite plaque (7).

**8.** Agencement de plancher selon la revendication 7, **caractérisé en ce que** l'absorbant (8) a une épaisseur qui correspond sensiblement à la distance entre ladite surface (6) du châssis (5) et ladite plaque (7).

**9.** Agencement de plancher selon la revendication 7, **caractérisé en ce que** l'absorbant (8) a une épaisseur qui est plus petite que la distance entre ladite surface (6) du châssis (5) et ladite plaque (7).

**10.** Agencement de plancher selon la revendication 7, **caractérisé en ce que** l'absorbant (8) remplit sensiblement ledit vide.

**11.** Agencement de plancher selon l'une des deux revendications 7 et 10, **caractérisé en ce qu'**un intervalle est agencé entre le châssis (5) et l' absorbant (8).

**12.** Agencement de plancher selon la revendication 7, **caractérisé en ce que** l'absorbant (8) a un facteur d'absorption situé entre 0,3 et 1,0.

**13.** Agencement de plancher selon la revendication 12, **caractérisé en ce que** le facteur d'absorption est calculé sur la base de l'impédance de l'air et de l'impédance de l'absorbant.

**14.** Agencement de plancher selon l'une quelconque des revendications précédentes, **caractérisé en ce que** ladite plaque (7) est constituée de polypropylène ou de polyéthylène.

**15.** Agencement de plancher selon l'une quelconque des revendications précédentes, **caractérisé en ce que** ladite plaque (7) a une épaisseur d'environ 2 à 6 mm.

**16.** Agencement de plancher selon l'une quelconque des revendications précédentes, **caractérisé en ce que** la distance entre la surface (6) du châssis (5) et la plaque (7) est d'environ 15 à 25 mm.

FIG 1

EP 1 286 879 B1

FIG 2

FIG 3

7

12

14

8

15

FIG 4